# EUROPÄISCHE PATENTSCHRIFT

(11) **EP 4 124 217 B1**
(45) Veröffentlichungstag und Bekanntmachung des Hinweises auf die Patenterteilung: **02.10.2024**
(21) Anmeldenummer: 22186167.7
(22) Anmeldetag: 21.07.2022
(51) Int. Cl.: A01B 23/02, A01B 63/00, A01B 63/24

(54) **LANDWIRTSCHAFTLICHE BODENBEARBEITUNGSMASCHINE SOWIE VERFAHREN ZU DEREN ABSTELLEN IN EINER PARKPOSITION**
AGRICULTURAL SOIL WORKING MACHINE AND METHOD FOR PARKING IT IN A PARKING POSITION
MACHINE AGRICOLE DE TRAVAIL DU SOL, AINSI QUE SON PROCÉDÉ DE STATIONNEMENT DANS UNE POSITION DE STATIONNEMENT

(30) Priorität: 28.07.2021 DE 102021119609
(43) Veröffentlichungstag der Anmeldung: 01.02.2023
(73) Patentinhaber: Pöttinger Landtechnik GmbH, 4710 Grieskirchen (AT)
(72) Erfinder: BERGER, Thomas, 4710 Grieskirchen (AT); MEINDLHUMER, Wilhelm, 4710 Grieskirchen (AT)
(74) Vertreter: Thoma, Michael

(56) Entgegenhaltungen:
- DD-A1- 63 911
- GB-A- 1 392 193
- GB-A- 2 183 132

## Beschreibung

Die vorliegende Erfindung betrifft eine landwirtschaftliche Bodenbearbeitungsmaschine mit zumindest einem Bodenbearbeitungswerkzeug, insbesondere -zinken, das in einer aufrechten, in Fahrtrichtung weisenden Ebene schwenkbar gelagert ist, sowie ein Verfahren zum Abstellen einer solchen Bodenbearbeitungsmaschine auf dem Boden in eine Parkposition.

Bodenbearbeitungsmaschinen wie Kreiseleggen, Scheibeneggen oder Grubber sind bei größeren Arbeitsbreiten regelmäßig klappbar ausgebildet, um die Maschinenbreite auf das für den Straßentransport zulässige Maß reduzieren zu können und auch in der Parkposition nicht zu viel Platz zu benötigen. Dabei können in der Arbeitsposition liegend quer zur Fahrtrichtung ausgerichtete Aggregatsteile, die in Reihe nebeneinander angeordnete Bodenbearbeitungswerkzeuge aufweisen können, ggf. zusammen mit zugeordneten, nach- oder vorauslaufenden Einheiten wie Packerwalzenteilen um eine etwa liegende, in Fahrtrichtung weisende Schwenkachse in eine Vorgewende- und/oder Transportstellung ausgehoben werden, in der die genannten Aggregatsteile ggf. mit den zugehörigen Nach- oder Vorläufereinheiten etwa aufrecht stehen können. Gegebenenfalls können solche Seitenflügel bzw. Aggregatsteile auch um aufrechte Schwenkachsen nach hinten oder vorne in eine verschmälerte Transport- bzw. Parkstellung verschwenkt werden, um die Maschinenbreite zu verjüngen.

Bei solchen klappbaren Bodenbearbeitungsmaschinen muss zwischen den mittleren Bodenbearbeitungswerkzeugen ein gewisser Abstand verbleiben, um zu verhindern, dass die nebeneinander liegenden Bodenbearbeitungswerkzeuge zusammenschlagen bzw. miteinander kollidieren. Um dennoch eine saubere, vollständige Bodenbearbeitung auch im Mittelbereich zu erzielen, kann ein Mittelwerkzeug vor die eigentliche Bodenbearbeitungs-Werkzeugreihe gesetzt werden und beispielsweise am Anbaubock oder an einer vom Maschinenrahmen vorspringenden Konsole befestigt werden, vgl. beispielsweise EP 3 620 038 A1. Diese Mittelwerkzeuge klappen beim Verschwenken der Seitenflügel regelmäßig nicht mit weg, sondern bleiben an sich unverändert am zentralen Maschinenrahmen bzw. dem Anbaubock oder einer entsprechenden Lagerkonsole stehen. Wird die Maschine in der zusammengeklappten Vorgewende- und/oder Transportstellung abgestellt, stehen diese Mittelwerkzeuge an sich zu weit nach unten vor und müssen erst höhergestellt werden, damit die Maschine mit den bestimmungsgemäßen Aufstandsflächen bzw. -punkten auf den Boden abgestellt werden kann, ohne dass die Mittelwerkzeuge in den Boden, beispielsweise den Asphalt stechen würden.

Hierzu wird regelmäßig die Höhenverstellbarkeit der Mittelwerkzeuge genutzt. Diese sind oft durch eine Schiebeführung höhenverstellbar geführt und mittels eines Steckbolzens oder anderer Verriegelungsmittel in der gewünschten Arbeitstiefe fixierbar. Dementsprechend kann der Schlepperführer vor dem Abstellen der Bodenbearbeitungsmaschine absteigen und das Mittelwerkzeug höher stellen, um dann die Maschine abstellen zu können, ohne dass das Mittelwerkzeug in den Boden sticht.

Eine ähnliche Problematik entsteht nicht nur bei den genannten Mittelwerkzeugen, sondern auch bei Spurlockerungswerkzeugen, die aus der Mitte heraus versetzt im Bereich der Schlepperfahrspur angeordnet werden und in Fahrtrichtung vor der eigentlichen Bodenbearbeitungswerkzeugreihe gefahren werden, um die von den Schlepperrädern verdichtete Fahrspur aufzulockern und für die Bodenbearbeitungswerkzeuge vorzubereiten, um ein gleichmäßiges Bearbeitungsergebnis zu erzielen. Solche Spurlockerer bzw. -zinken sind beispielsweise an der klappbaren Kreiselegge Lion 103C der Firma Pöttinger bekannt.

Die genannten Mittelwerkzeuge und auch Spurlockerer, aber auch generell Bodenbearbeitungswerkzeuge wie -zinken an anderer Stelle der Maschine können starr befestigt, aber auch in einer aufrechten, in Fahrtrichtung weisenden Ebene schwenkbar gelagert sein. Eine solche schwenkbare Lagerung erlaubt es, den Bodenbearbeitungswerkzeugen Hindernissen wie Steinen oder anderen Hindernissen auszuweichen, und hilft, Beschädigungen zu vermeiden. Gleichzeitig kann die schwenkbare Aufhängung der Bodenbearbeitungswerkzeuge aber auch dazu genutzt werden, eine gewisse Bodenanpassung zu erzielen, da einzelne Bodenbearbeitungswerkzeuge nach oben ausweichen können, ohne dass dies die benachbarten Bodenbearbeitungswerkzeuge ausheben würde.

Üblicherweise werden solche schwenkbar aufgehängten Bodenbearbeitungswerkzeuge durch eine Vorspanneinrichtung, die eine mechanische oder ggf. auch fluidgetriebene Federeinrichtung umfassen kann, in eine arbeitsbereite Ausgangsstellung vorgespannt bzw. in der arbeitsbereiten Ausgangsstellung gehalten, solange keine übermäßigen Bodeneingriffskräfte auf das jeweilige Bodenbearbeitungswerkzeug einwirken und dieses noch nicht in seine Ausweichstellung getrieben wird. Die Bodenbearbeitungswerkzeuge können dabei aus der besagten arbeitsbereiten Ausgangsstellung, die die Bodenbearbeitungswerkzeuge ohne übermäßige Bodeneingriffskräfte einnehmen, üblicherweise unter Überwindung der Vorspannkräfte in Fahrtrichtung nach hinten und ggf. auch nach oben ausweichen, um über ein Hindernis wie einen Stein oder Fels hinwegzukommen. Solche elastisch nachgiebigen Aufhängungen für Bodenbearbeitungswerkzeuge wie -zinken zeigen diverse Schriften des Standes der Technik, vgl. beispielsweise EP 2 201 833 B1, EP 2 263 435 A1, US 2,565,668 A oder GB 340244 A.

Gemäß der Schrift GB 2183132 können verschieblich geführte Bodenbearbeitungszinken gegen einen Gummiblock elastisch zurückstoßen, wenn sie auf einen Stein auffahren. Die GB 1392193 zeigt Bodenbearbeitungszinken, die über einen Kurbelmechanismus auf und ab antreibbar sind.

Die Schrift DD 63 911 A1 zeigt ein Bodenbearbeitungsgerät, dessen Bodenzinken beim Rückwärtsfahren frei beweglich nach vorne oben schwenken können, um das Gerät leichter abstellen zu können. In der Arbeitsstellung sind die Zinken durch einen Anschlag starr gehalten.

Die genannte Abstellproblematik kann mit solchen elastisch nachgiebig gelagerten Bodenbearbeitungswerkzeugen nicht oder nur bedingt gelöst werden, da die Federvorspannung für die Bodenbearbeitungswerkzeuge üblicherweise recht hoch bzw. streng gewählt ist, um ein Nachgeben aus der arbeitsbereiten Ausgangsstellung tatsächlich erst beim Auflaufen auf ein hartes Hindernis wie einen Felsen zu gestatten, andererseits aber den im normalen, hindernisfreien Betrieb entstehenden, teilweise auch schon recht hohen Bodeneingriffskräften zu widerstehen. Trotz elastischer Aufhängung schneiden solche Bodenbearbeitungswerkzeuge trotzdem immer noch in den Boden ein, wenn die Maschine mit aufgeklappten Seitenflügeln abgestellt wird.

Der vorliegenden Erfindung liegt hiervon ausgehend die Aufgabe zugrunde, eine verbesserte landwirtschaftliche Bodenbearbeitungsmaschine der genannten Art zu schaffen, die Nachteile des Stands der Technik vermeidet und letzteren in vorteilhafter Weise weiterbildet. Insbesondere soll in einfacher Weise ein Abstellen der Maschine ermöglicht werden, ohne vom Schlepper absteigen zu müssen und ohne Beschädigungen der Bodenbearbeitungswerkzeuge bzw. der Bodenoberfläche befürchten zu müssen.

Erfindungsgemäß wird die genannte Aufgabe durch eine landwirtschaftliche Bodenbearbeitungsmaschine gemäß Anspruch 1 sowie ein Verfahren gemäß Anspruch 13 gelöst. Bevorzugte Ausgestaltungen der Erfindung sind Gegenstand der abhängigen Ansprüche.

Es wird also vorgeschlagen, das zumindest eine Bodenbearbeitungswerkzeug entgegen der bekannten Nachgiebigkeitsrichtung zum Ausweichen an Hindernissen in Fahrtrichtung nach vorne wegbewegbar zu lagern, so dass das Bodenbearbeitungswerkzeug beim Abstellen der Maschine in einfacher Weise durch leichtes Rückwärtsfahren weggeschwenkt werden kann und nicht in den Boden sticht. Erfindungsgemäß ist das Bodenwerkzeug aus einer arbeitsbereiten Ausgangsstellung, die das Bodenwerkzeug zumindest ohne Bodeneingriffskräfte einnimmt, in Fahrtrichtung nach vorne oben in eine Abstellposition wegbewegbar aufgehängt. Während bislang bei elastisch aufgehängten Bodenbearbeitungswerkzeugen ein Wegschwenken zum Ausweichen vor Hindernissen im Arbeitsbetrieb bzw. übermäßigen Belastungen nur nach hinten oben vorgesehen war, sieht die von der Erfindung vorgeschlagene Aufhängung ein Wegbewegen nach vorne oben vor, um ein Abstellen der Maschine ohne Einstechen oder Beschädigen der Bodenbearbeitungswerkzeuge bzw. des Bodenbelags in der Parkposition zu ermöglichen.

Die Wegbewegbarkeit nach vorne ist zusätzlich zu einer elastischen Nachgiebigkeit nach hinten vorgesehen, um unter Überwindung elastischer Vorspannkräfte einer Vorspanneinrichtung wie einer Federeinrichtung ein Ausweichen vor Hindernissen bzw. ein Nachgeben bei übermäßigen Arbeitsbetriebskräften zu ermöglichen. Bei einer solchen elastisch nachgiebigen Aufhängung des Bodenbearbeitungswerkzeugs kann dieses natürlich auch aus der elastisch nach hinten ausgelenkten Auslenk- bzw. Ausweichstellung wieder zurück in Fahrtrichtung nach vorne schwenken, wobei dies mit einer Bewegungskomponente nach unten einhergeht. Die von der Erfindung vorgeschlagene Bewegbarkeit nach vorne oben ist jedoch auch aus der unausgelenkten, arbeitsbereiten Ausgangsstellung möglich, die das Bodenwerkzeug ohne Bodeneingriffskräfte einnimmt und in der das Bodenwerkzeug noch nicht - beispielsweise durch einen Stein - nach hinten ausgelenkt ist. Wird beispielsweise die Bodenbearbeitungsmaschine vom Schlepper ausgehoben oder mittels eines Transportfahrwerks in eine Stellung mit ausreichend Bodenfreiheit verbracht, nimmt das Bodenwerkzeug eine unausgelenkte, aber arbeitsbereite Ausgangsstellung ein. Wird die Bodenbearbeitungsmaschine dann auf dem Boden abgestellt, kann das Bodenbearbeitungswerkzeug zwar zunächst auch mit dem Boden in Eingriff gelangen, dann jedoch durch leichtes Rückwärtsfahren nach vorne oben wegbewegt werden, so dass das Bodenbearbeitungswerkzeug nicht in den Boden einsticht.

Nach vorne in Fahrtrichtung braucht das Bodenbearbeitungswerkzeug nicht gehalten oder durch einen Anschlag blockiert werden, da im normalen Arbeitsbetrieb die Bodeneingriffskräfte das Werkzeug immer nach hinten ziehen bzw. drücken. Hierdurch wird die Möglichkeit geschaffen, für das Abstellen in die Parkposition das Bodenbearbeitungswerkzeug nach vorne oben wegbewegen bzw. -schwenken zu können, ohne dass dies den Arbeitsbetrieb beeinträchtigen würde.

In vorteilhafter Weiterbildung der Erfindung kann die Schwenkachse, um die das Bodenbearbeitungswerkzeug in der genannten Weise nach vorne oben wegschwenkbar ist, gleichzeitig für die Höhen- bzw. Arbeitstiefeneinstellbarkeit des Bodenbearbeitungswerkzeugs vorgesehen sein oder einen Teil der Höhen- bzw. Arbeitstiefeneinstellvorrichtung bilden. Beispielsweise kann die Schwenkachse von einem Absteckbolzen gebildet sein, mit Hilfe dessen das Bodenbearbeitungswerkzeug in verschiedenen Höhen bzw. Arbeitstiefen abgesteckt und fixiert werden kann. Das Bodenbearbeitungswerkzeug kann dann in der jeweils abgesteckten Arbeitstiefenstellung um den besagten Absteckbolzen nach vorne oben wegschwenken, wenn die Maschine am Boden abgestellt wird.

Die Aufhängung kann in vorteilhafter Weiterbildung der Erfindung quer zur Fahrtrichtung starr ausgebildet sein und das Bodenbearbeitungswerkzeug gegenüber Verschieben und Verkippen quer zur Fahrtrichtung starr bzw. unnachgiebig festhalten und lediglich eine Bewegung, insbesondere Verschwenken in einer aufrechten, etwa in Fahrtrichtung weisenden Ebene zulassen.

Die Aufhängung kann gegen Bewegungen entgegen der Fahrtrichtung nach hinten einen Anschlag aufweisen, an dem das Bodenbearbeitungswerkzeug im Arbeitsbetrieb ansteht, so dass das Bodenbearbeitungswerkzeug nicht oder zumindest nicht ohne weiteres nach hinten ausweichen kann. Dabei kann der Anschlag beweglich gelagert und von der Vorspanneinrichtung, insbesondere einer Federeinrichtung in einer Arbeitsstellung gehalten sein, so dass das Bodenbearbeitungswerkzeug nur unter Überwindung der Vorspannkraft nach hinten ausweichen kann. Gegebenenfalls kann anstelle einer Vorspanneinrichtung auch eine Halteeinrichtung mit einem Auslösemechanismus ähnlich einer Skibindung vorgesehen sein, um bei einem Auffahren auf Steine oder ähnliche Hindernisse ein Auslösen und damit ein Ausweichen des Bodenbearbeitungswerkzeugs nach hinten zuzulassen.

In vorteilhafter Weiterbildung der Erfindung kann die Wegschwenkbarkeit aus der arbeitsbereiten Ausgangsstellung nach vorne oben für das Abstellen der Maschine in die Parkposition freigängig ohne Vorspannkräfte und/oder ohne Dämpfungskräfte ausgebildet sein, so dass im Wesentlichen nur das Gewicht bzw. die Schwerkraft des Bodenbearbeitungswerkzeugs und ggf. Reibungskräfte in der beweglichen Lagerung überwunden werden müssen, um das Bodenbearbeitungswerkzeug aus der genannten, unausgelenkten, arbeitsbereiten Ausgangsstellung nach vorne oben wegbewegen zu können.

Vorteilhafterweise ist die Aufhängung des Bodenbearbeitungswerkzeugs derart ausgebildet, dass die Bewegung nach vorne oben eine Schwenkbewegung ist oder zumindest eine Schwenkbewegungskomponente umfasst. Gegebenenfalls könnte durch eine Lenkeraufhängung eine kombinierte Verschiebe- und Schwenkbewegung das Wegbewegen des Bodenbearbeitungswerkzeugs nach vorne und oben für das Abstellen in die Parkposition ermöglichen.

Das in der genannten Weise nach vorne wegschwenkbare Bodenbearbeitungswerkzeug kann insbesondere an einem nicht wegklappbaren bzw. auch in der Transport- bzw. Parkstellung unten verbleibenden Maschinenrahmenteil aufgehängt sein. Insbesondere kann das genannte Bodenbearbeitungswerkzeug durch die beschriebene Aufhängung am Anbaubock oder einem zentralen Maschinenrahmenteil oder einer mit den genannten Komponenten verbundenen Lagerkonsole angebracht sein, so dass das Bodenbearbeitungswerkzeug auch beim Wegschwenken bestimmter Aggregatsteile wie beispielsweise den Seitenflügeln der Bodenbearbeitungswerkzeug-Reihe und/oder zugeordneten, nach- oder vorauslaufenden Einheiten wie Packerwalzeneinheiten in eine ausgehobene Vorgewende- und/oder Transportstellung, in einer arbeitspositionsähnlichen Stellung nach unten auf den Boden zu gerichtet verbleibt. Insbesondere kann das in der genannten Weise aufgehängte Bodenbearbeitungswerkzeug ein Mittelwerkzeug sein, das der Bodenbearbeitungs-Werkzeugreihe, die die Hauptbodenbearbeitung ausführt, vorausläuft oder nachläuft, um eine mittlere, von der genannten Bodenbearbeitungs-Werkzeugreihe evtl. unbearbeitet gelassene Mittelfahrspur zu bearbeiten. Alternativ oder zusätzlich zu einem solchen Mittelwerkzeug können auch in den Fahrspuren der Schlepperräder und/oder den Fahrspuren eines Bodenabstützfahrwerks der Bodenbearbeitungsmaschine laufenden Lockerungswerkzeuge in der genannten Weise aufgehängt sein, so dass diese nach vorne oben wegschwenken können, wenn die Maschine auf dem Boden abgestellt wird.

Insbesondere kann das in der genannten Weise aufgehängte Bodenbearbeitungswerkzeug in Form eines Bodenzinkens oder eines Zinkenwerkzeugs, insbesondere in Form eines Grubber- oder Auflockerungszinkens ausgebildet sein.

Um beim Absetzen der Maschine auf dem Boden ein leichtgängiges Bewegen des Bodenbearbeitungswerkzeugs nach vorne oben zu ermöglichen und die Parkfunktion der Aufhängung störungsfrei nutzen zu können, ist in vorteilhafter Weiterbildung der Erfindung vorgesehen, dass die Aufhängung eine Schwenkachse für das Wegschwenken des Bodenbearbeitungswerkzeugs nach vorne oben besitzt, die in Fahrtrichtung betrachtet hinter einem vorderen und/oder unteren Endabschnitt des Bodenbearbeitungswerkzeugs angeordnet ist. Durch einen Versatz der Schwenkachse nach hinten gegenüber dem Aufstandspunkt, mit dem das Bodenbearbeitungswerkzeug beim Absetzen der Maschine auf den Boden mit dem Boden in Eingriff gerät, kann sichergestellt werden, dass das Bodenbearbeitungswerkzeug in der gewünschten Weise nach vorne oben wegschwenkt und das Bodenbearbeitungswerkzeug vom Gewicht der Maschine nicht in der Ausgangsstellung blockiert wird. Im Gegenteil kann das Gewicht der Maschine beim Absetzen der Maschine in die Parkposition auf dem Boden ein Moment auf das Bodenbearbeitungswerkzeug ausüben, das das Bodenbearbeitungswerkzeug nach vorne oben zu drücken versucht, so dass dann zusammen mit einem leichten Rückwärtsfahren das gewünschte Wegbewegen des Bodenbearbeitungswerkzeugs nach vorne oben leicht erreichbar ist.

Um die gewünschte Bewegung nach vorne oben beim Abstellen in die Parkposition in günstiger Weise zu unterstützen, kann der Versatz der Schwenkachse gegenüber einem vorderen und/oder unteren Endabschnitt des Bodenbearbeitungswerkzeugs nach hinten, etwa 10% bis 50% oder 10% bis 20% der Höhe der besagten Schwenkachse über dem Boden bzw. über dem genannten vorderen und/oder unteren Endabschnitt des Werkzeugs betragen.

Besondere Vorteile ergeben sich, wenn das in der genannten Weise aufgehängte Bodenbearbeitungswerkzeug an einer Bodenbearbeitungsmaschine eingesetzt ist, die klappbare Seitenflügel besitzt bzw. klappbar ausgebildet ist oder in eine ausgehobene Vorgewende- und/oder Transportstellung verbringbare Aggregatsteile besitzt, wobei das genannte Bodenbearbeitungswerkzeug an einem nicht in die Vorgewende- und/oder Transportstellung verbringbaren Maschinenrahmenteil bzw.

Anbaubock vorgesehen sein kann, ohne das Abstellen in die Parkposition durch ein Einstechen in den Boden zu behindern.

Die Erfindung wird nachfolgend anhand eines bevorzugten Ausführungsbeispiels und zugehörigen Zeichnungen näher erläutert. In den Zeichnungen zeigen:
- Fig. 1:: eine Draufsicht auf eine landwirtschaftliche Bodenbearbeitungsmaschine in Form eines an einen Schlepper angebauten Anbaugeräts mit einer Bodenwerkzeugreihe und einer Nachläufereinheit sowie einem der Bodenwerkzeugreihe vorauslaufenden Mittelwerkzeug in Form eines Bodeneingriffszinkens nach einer vorteilhaften Ausführung der Erfindung,
- Fig. 2:: eine ausschnittsweise Seitenansicht der Bodenbearbeitungsmaschine aus Fig. 1, die die Aufhängung des Mittelwerkzeugs zeigt.

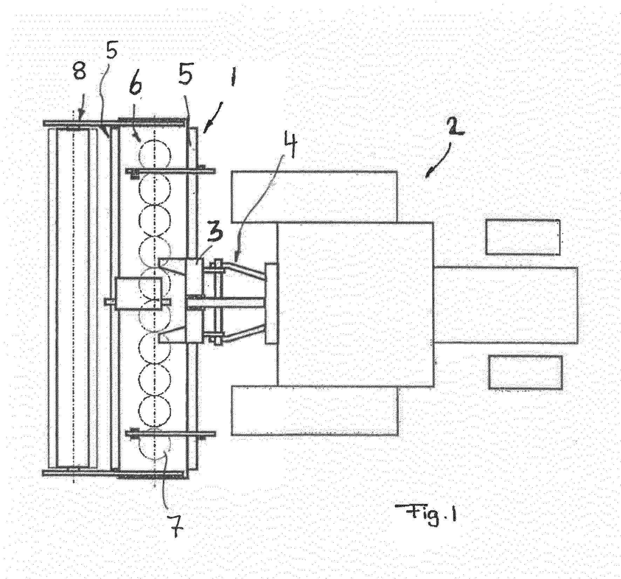

Wie Fig. 1 zeigt, kann die Bodenbearbeitungsmaschine 1 als Anbaugerät ausgebildet sein, das an einen Schlepper 2 angebaut werden kann, beispielsweise mittels eines Anbaubocks 3 und einer Dreipunktanlenkung mit Ober- und Unterlenkern 4.

Ein Maschinenrahmen 5, der an dem genannten Anbaubock 3 der Bodenbearbeitungsmaschine 1 aufgehängt bzw. damit verbunden sein kann, trägt zumindest eine Bodenbearbeitungs-Werkzeugreihe 6, die sich in der abgesenkten Arbeitsstellung liegend quer zur Fahrtrichtung erstrecken und eine Vielzahl nebeneinander angeordneter Bodenbearbeitungswerkzeuge 7 beispielsweise in Form von Kreiselzinken aufweisen kann, die um aufrechte Achsen drehbar antreibbar sein können. Es können aber auch andere Bodenbearbeitungswerkzeuge 7 beispielsweise in Form von Schrägscheiben oder Grubberzinken vorgesehen sein.

Der zumindest einen Bodenwerkzeugreihe 6 kann eine Nachläufereinheit 8 nachlaufend zugeordnet sein, beispielsweise in Form einer Packerradwalze, die gleichzeitig der Arbeitstiefeneinstellung der Bodenbearbeitungswerkzeuge dienen kann.

Die genannte Werkzeugreihe 6 und die Nachläufereinheit 8 können in mehrere Aggregatsteile unterteilt sein, beispielsweise in rechte und linke Seitenflügel, und in eine Vorgewende- und/oder Transportstellung verbracht werden, in der sich die genannten Aggregatsteile beispielsweise aufrecht stehend erstrecken können. Beispielsweise kann ein die Bodenbearbeitungswerkzeuge 7 tragender Werkzeugträger und ein Träger der Nachläufereinheit 8 geteilt ausgebildet sein und um liegende, in Fahrtrichtung weisende Schwenkachsen nach oben in die genannte Transportstellung verschwenkt werden, wie dies an sich per se bekannt ist.

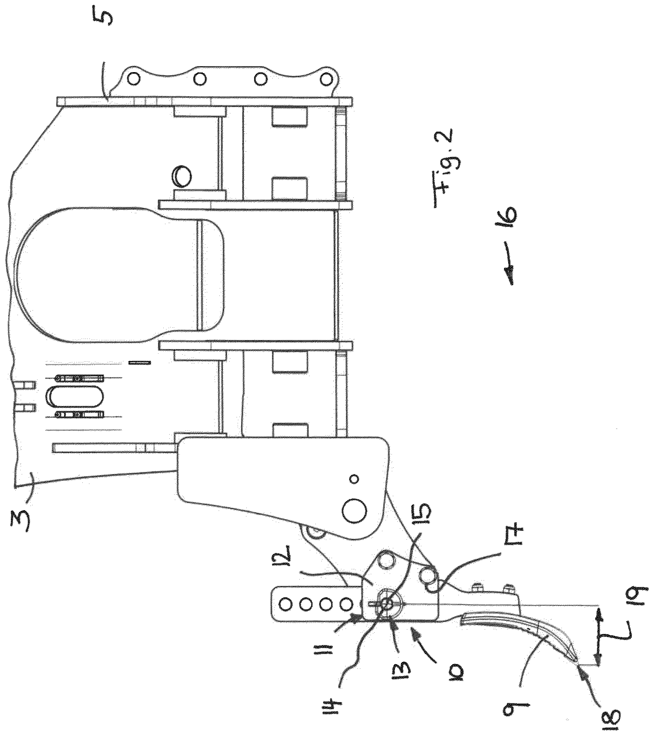

Wie Figur 2 zeigt, umfasst die Bodenbearbeitungsmaschine 1 weiterhin ein zusätzliches Bodenbearbeitungswerkzeug 9, das ein der Werkzeugreihe 6 vorauslaufendes Mittelwerkzeug sein kann, aber auch ein in den Fahrspuren der Schlepperräder laufendes Lockerungswerkzeug sein kann.

Das genannte Bodenbearbeitungswerkzeug 9 kann insbesondere als Bodenzinken ausgebildet sein, vgl. Fig. 2, beispielsweise einen sich nach unten erstreckenden und dabei nach vorne gebogenen Eingriffszinken aufweisen.

Unabhängig hiervon kann das genannte Bodenbearbeitungswerkzeug 9 an dem Anbaubock 3 oder einem damit verbundenen Maschinenrahmenteil oder ggf. einer daran befestigten Trägerkonsole gelagert sein, insbesondere derart, dass das Bodenbearbeitungswerkzeug 9 eine Bewegung der genannten Aggregatsteile in die Vorgewende- bzw. Transportstellung nicht mitmacht. Das Bodenbearbeitungswerkzeug 9 kann insbesondere unter einem zentralen Maschinenrahmen- bzw. Anbaubockteil angeordnet sein und zum Boden hin vorspringen, auch wenn Seitenflügel oder andere Aggregatsteile in eine Transport- bzw. Parkstellung verschwenkt sind, in der die Arbeitsbreite der Maschine reduziert ist.

Wie Fig. 2 zeigt, kann die Aufhängung 10 des Bodenbearbeitungswerkzeugs 9 höhenverstellbar ausgebildet sein, um die Arbeitstiefe des Bodenbearbeitungswerkzeugs 9 einstellen zu können. Beispielsweise kann die Aufhängung 10 eine Schiebeführung 11 umfassen, in der das Bodenbearbeitungswerkzeug 9 nach oben und unten verschoben werden kann bzw. in einer Richtung mit einer Bewegungskomponente nach oben und unten verschoben werden kann. Die Schiebeführung 11 kann beispielsweise einen Halteschuh 12 umfassen, der das Bodenbearbeitungswerkzeug 9 quer zur Fahrtrichtung - also senkrecht zur Zeichenebene der Fig. 2 - unbeweglich fixiert, aber Verschiebungen aufwärts und abwärts zulässt, wenn die der Schiebeführung 11 zugeordnete Feststelleinrichtung 13 gelöst ist.

Die genannte Feststelleinrichtung 13 kann beispielsweise ein Absteckbolzen 14 sowie ein Lochbild im Bodenbearbeitungswerkzeug 9 bzw. einem Werkzeugträger umfassen, so dass das Bodenbearbeitungswerkzeug 9 durch Einstecken des Absteckbolzens 14 in verschiedenen Höhen bzw. Arbeitsstellungen festgestellt werden kann.

Der genannte Absteckbolzen 14 kann gleichzeitig eine Schwenkachse 15 bilden, um die das Bodenbearbeitungswerkzeug 9 schwenken kann, wobei sich die genannte Schwenkachse 15 vorteilhafterweise liegend quer zur Fahrtrichtung erstreckt, um ein Verschwenken des Bodenbearbeitungswerkzeugs 9 in einer aufrechten, in Fahrtrichtung weisenden Ebene zuzulassen.

Ein Verschwenken des Bodenbearbeitungswerkzeugs 9 entgegen der Fahrtrichtung 16 nach hinten wird dabei von einem Anschlag 17 blockiert bzw. behindert. Der Anschlag 17 kann dabei starr an der Aufhängung 10 befestigt sein, beispielsweise von einer rückseitigen Wandung der Schiebeführung 11 gebildet sein. Beispielsweise kann der zuvor genannte Halteschuh 12 U-förmig konturiert sein, so dass die beiden seitlichen Schenkel Querbewegungen quer zur Fahrtrichtung behindern und der die beiden Seitenschenkel verbindende Bodenschenkel als Anschlag 17 dient. Gegebenenfalls kann der genannte Halteschuh 12 auch zwei Platten umfassen, die sich aufrecht näherungsweise parallel zur Fahrtrichtung 16 erstrecken und durch Schraubbolzen zusammengehalten sind, wobei dann einer der genannten Schraubbolzen den Anschlag 17 bilden kann.

Der genannte Anschlag 17 ist von der Schwenkachse 15 beabstandet und kann beispielsweise unterhalb der Schwenkachse 15 hinter dem Bodenbearbeitungswerkzeug 9 vorgesehen sein oder ggf. auch oberhalb der Schwenkachse 15 vor dem Bodenbearbeitungswerkzeug angeordnet sein.

Wie eingangs erwähnt, kann der Anschlag 17 ggf. auch beweglich gelagert und durch eine Vorspanneinrichtung beispielsweise in Form einer Vorspannfeder in einer Ausgangsstellung gehalten sein, um bei übermäßigen Eingriffskräften wie beim Auflaufen auf einen Stein ein Ausweichen des Bodenbearbeitungswerkzeugs 9 zuzulassen.

Während der Anschlag 17 ein Ausweichen des Bodenbearbeitungswerkzeugs 9 nach hinten verhindert oder zumindest behindert, kann das Bodenbearbeitungswerkzeug 9, insbesondere dessen Teil unterhalb der Aufhängung 10, in Fahrtrichtung 16 nach vorne oben wegschwenken. Die Aufhängung 10 ist also derart ausgebildet, dass sie ein Verschwenken des Bodenbearbeitungswerkzeugs 9 um die liegende, sich quer zur Fahrtrichtung erstreckende Schwenkachse 15 in Fahrtrichtung nach vorne oben zulässt, um beim Abstellen der Bodenbearbeitungsmaschine 1 auf dem Boden, insbesondere in Verbindung mit einem leichten Rückwärtsfahren, ein Ausweichen des Bodenbearbeitungswerkzeugs 9, insbesondere ein Verstellen nach oben zuzulassen, um nicht in den Boden einzustechen.

Beispielsweise kann die Schiebeführung 11 und/oder der Halteschuh 12 zur Vorderseite hin offen ausgebildet sein und/oder an der Vorder- und/oder Rückseite des Bodenbearbeitungswerkzeugs 9 so viel Luft zur Kontur des Bodenbearbeitungswerkzeugs 9 haben, dass das Bodenbearbeitungswerkzeug 9 aus der in Fig. 2 gezeigten, arbeitsbereiten Ausgangsstellung nach vorne oben wegschwenken kann.

Um beim Absetzen der Maschine auf dem Boden ein leichtgängiges Bewegen des Bodenbearbeitungswerkzeugs 9 nach vorne oben zu ermöglichen und die Parkfunktion der Aufhängung 10 störungsfrei nutzen zu können, kann die Schwenkachse 15 des Bodenbearbeitungswerkzeugs 9 in Fahrtrichtung betrachtet hinter einem vorderen und/oder unteren Endabschnitt 18 des Bodenbearbeitungswerkzeugs 9 angeordnet ist. Durch den horizontalen Versatz 19 der Schwenkachse 15 nach hinten gegenüber dem Aufstandspunkt, mit dem das Bodenbearbeitungswerkzeug 9 beim Absetzen der Maschine 1 mit dem Boden zuerst in Eingriff gerät, kann sichergestellt werden, dass das Bodenbearbeitungswerkzeug 9 in der gewünschten Weise nach vorne oben wegschwenkt.

Vorteilhafterweise kann der Versatz 19 der Schwenkachse 15 gegenüber dem vorderen und/oder unteren Endabschnitt 18 des Bodenbearbeitungswerkzeugs 9 nach hinten, etwa 10% bis 50% oder 10% bis 20% der Höhe der besagten Schwenkachse 15 über dem Boden bzw. über dem genannten vorderen und/oder unteren Endabschnitt 18 des Werkzeugs 9 betragen.

## Patentansprüche

1. Landwirtschaftliche Bodenbearbeitungsmaschine, mit zumindest einem Bodenbearbeitungswerkzeug (9), das in einer aufrechten, in Fahrtrichtung weisenden Ebene bewegbar, insbesondere schwenkbar aufgehängt ist, wobei das Bodenbearbeitungswerkzeug (9) aus einer arbeitsbereiten Ausgangsstellung, die das Bodenbearbeitungswerkzeug (9) zumindest ohne Bodeneingriffskräfte einnimmt, in Fahrtrichtung (16) nach vorne oben in eine Abstellposition wegschwenkbar um eine sich liegend, quer zur Fahrtrichtung erstreckende Schwenkachse (15) aufgehängt ist, **dadurch gekennzeichnet, dass** das genannte Bodenbearbeitungswerkzeug (9) aus der arbeitsbereiten Ausgangsstellung unter Überwindung elastischer Vorspannkräfte einer Vorspanneinrichtung um die genannte Schwenkachse (15) elastisch nach hinten in eine Ausweichstellung auslenkbar ist.

2. Landwirtschaftliche Bodenbearbeitungsmaschine nach dem vorhergehenden Anspruch, wobei das Bodenbearbeitungswerkzeug (9) vorspannkraftfrei aus der genannten Ausgangsstellung in die genannte Abstellposition bewegbar gelagert ist.

3. Landwirtschaftliche Bodenbearbeitungsmaschine nach einem der vorhergehenden Ansprüche, wobei das genannte Bodenbearbeitungswerkzeug (9) aus der Abstellposition mittels Schwerkraft selbsttätig in die arbeitsbereite Ausgangsstellung zurückfährt, insbesondere zurückschwenkt, wenn das Bodenbearbeitungswerkzeug (9) vom Boden außer Eingriff gerät und/oder die Bodenbearbeitungsmaschine (1) ausgehoben wird.

4. Landwirtschaftliche Bodenbearbeitungsmaschine nach einem der vorhergehenden Ansprüche, wobei ein Anschlag (17) vorgesehen ist, an dem das Bodenbearbeitungswerkzeug (9) in der arbeitsbereiten Ausgangsstellung ansteht und von dem sich das Bodenbearbeitungswerkzeug (9) beim Verbringen in die genannte Abstellposition löst.

5. Landwirtschaftliche Bodenbearbeitungsmaschine nach Anspruch 4, wobei der genannte Anschlag (17) beweglich gelagert und mit der Vorspanneinrichtung verbunden ist, so dass das Bodenbearbeitungswerkzeug (9) aus der arbeitsbereiten Ausgangsstellung beim Auffahren auf ein Hindernis unter Überwindung der Vorspannkraft der Vorspanneinrichtung entgegen der Fahrtrichtung (16) nach hinten ausweichen kann.

6. Landwirtschaftliche Bodenbearbeitungsmaschine nach einem der vorhergehenden Ansprüche, wobei das Bodenbearbeitungswerkzeug (9) höhenveränderbar aufgehängt und damit in der Arbeitstiefe einstellbar ist.

7. Landwirtschaftliche Bodenbearbeitungsmaschine nach dem vorhergehenden Anspruch, wobei eine Schiebeführung (11) zum Verstellen der Arbeitstiefe des Bodenbearbeitungswerkzeugs (9) vorgesehen ist und eine Feststelleinrichtung (13) zum Feststellen des Bodenbearbeitungswerkzeugs (9) in verschiedenen Höhenstellungen aufweist, wobei die Feststelleinrichtung (13) die Schwenkachse (15) umfasst, um die das Bodenbearbeitungswerkzeug (9) aus der genannten arbeitsbereiten Ausgangsstellung in die genannte Abstellposition schwenkbar ist.

8. Landwirtschaftliche Bodenbearbeitungsmaschine nach dem vorhergehenden Anspruch, wobei die Schiebeführung (11) einen zu einer Seite hin offenen, U-förmigen Halteschuh (12) aufweist, in dem das Bodenbearbeitungswerkzeug (9) quer zur Fahrtrichtung (16) starr, aber in Höhenrichtung verstellbar und zwischen der arbeitsbereiten Ausgangsstellung und der Abstellposition schwenkbar gehalten ist.

9. Landwirtschaftliche Bodenbearbeitungsmaschine nach einem der vorhergehenden Ansprüche, wobei das genannte Bodenbearbeitungswerkzeug (9) an einem zentralen Maschinenrahmenteil (5) und/oder an einem Anbaubock (3) aufgehängt ist und auch beim Absetzen der Bodenbearbeitungsmaschine auf dem Boden in eine Parkposition eine nach unten auf den Boden gerichtete Ausrichtung einnimmt.

10. Landwirtschaftliche Bodenbearbeitungsmaschine nach einem der vorhergehenden Ansprüche, wobei das genannte Bodenbearbeitungswerkzeug (9) ein Mittelwerkzeug in einer von weiteren Bodenbearbeitungswerkzeugen unbearbeitet gelassenen Mittelfahrspur und/oder ein Spurlockerungswerkzeug in den Fahrspuren von Schlepperrädern bildet, wobei das Bodenbearbeitungswerkzeug (9) vorzugsweise vorauslaufend oder nachlaufend zu einer Hauptbodenbearbeitungswerkzeugreihe angeordnet ist.

11. Landwirtschaftliche Bodenbearbeitungsmaschine nach einem der vorhergehenden Ansprüche, wobei das Bodenbearbeitungswerkzeug (9) einen Bodenzinken aufweist.

12. Landwirtschaftliche Bodenbearbeitungsmaschine nach einem der vorhergehenden Ansprüche, wobei weitere Bodenbearbeitungswerkzeuge (7) an einem oder mehreren klappbaren Aggregatsteilen angeordnet sind, die aus einer abgesenkten Arbeitsstellung in eine ausgehobene, insbesondere aufrechte Transport- und/oder Vorgewendestellung verbringbar sind, wobei das in Fahrtrichtung nach vorne oben in die genannte Abstellposition bewegbare Bodenbearbeitungswerkzeug (9) an einem Maschinenteil aufgehängt ist, der von der genannten Bewegung der genannten Aggregatsteile in die ausgehobene Vorgewende- und/oder Transportstellung ausgenommen ist.

13. Verfahren zum Abstellen einer landwirtschaftliche Bodenbearbeitungsmaschine (1), die nach einem der vorhergehenden Ansprüche ausgebildet ist, in einer Parkposition auf dem Boden, wobei zumindest ein Aggregatsteil in eine die Maschinenarbeitsbreite verringernde Vorgewende- und/oder Transportstellung verbracht wird und die Bodenbearbeitungsmaschine auf den Boden abgesenkt wird, wobei beim und/oder nach dem Absenken die Bodenbearbeitungsmaschine (1) rückwärts entgegen ihrer bestimmungsgemäßen Arbeitsfahrtrichtung (16) verfahren wird und das Bodenbearbeitungswerkzeug (9) durch Bodeneingriff beim Rückwärtsfahren aus seiner arbeitsbereiten Ausgangsstellung nach vorne oben in seine Abstellposition bewegt wird.

## Claims

1. Agricultural ground working machine, comprising at least one ground working tool (9), which is suspended movably, in particular pivotably, in an upright plane pointing in the direction of travel, wherein the ground working tool (9) can be pivoted away from a ready-to-work starting position, which the ground working tool (9) assumes at least without ground engagement forces, in the direction of travel (16) forwards and upwards into a parking position about a horizontal pivot axis (15) transverse to the direction of travel, **characterised in that** said ground working tool (9) can be deflected about said pivot axis (15) elastically rearwards from the ready-to-work starting position, overcoming elastic pre-tensioning forces of a pre-tensioning device, into an evasive position.

2. Agricultural ground working machine according to the preceding claim, wherein the ground working tool (9) is mounted movably from said starting position into said parking position, free from pre-tensioning force.

3. Agricultural ground working machine according to any one of the preceding claims, wherein said ground working tool (9) moves back, in particular pivots back, automatically from the parking position by means of gravity force into the ready-to-work starting position, when the ground working tool (9) comes out of engagement with the ground and/or the ground working machine (1) is lifted out.

4. Agricultural ground working machine according to any one of the preceding claims, wherein a stop (17) is provided, against which the ground working tool (9) rests in the ready-to-work starting position and from which the ground working tool (9) releases as it is brought into said parking position.

5. Agricultural ground working machine according to claim 4, wherein said stop (17) is mounted movably and is connected to the pre-tensioning device, so that the ground working tool (9) can swerve rearwards, against the direction of travel (16), from the ready-to-work starting position when it hits an obstacle, overcoming the pre-tensioning force of the pre-tensioning device.

6. Agricultural ground working machine according to any one of the preceding claims, wherein the ground working tool (9) is suspended height-adjustably and is thus adjustable in the working depth.

7. Agricultural ground working machine according to the preceding claim, wherein a sliding guide (11) for adjusting the working depth of the ground working tool (9) is provided and comprises a locking device (13) for locking the ground working tool (9) in different height positions, wherein the locking device (13) comprises the pivot axis (15), about which the ground working tool (9) is pivotable from said ready-to-work starting position into said parking position.

8. Agricultural ground working machine according to the preceding claim, wherein the sliding guide (11) has a U-shaped holding shoe (12), which is open to one side and in which the ground working tool (9) is held rigidly transversely to the direction of travel (16), but adjustably in the height direction and pivotably between the ready-to-work starting position and the parking position.

9. Agricultural ground working machine according to any one of the preceding claims, wherein said ground working tool (9) is suspended on a central machine frame part (5) and/or on a headstock (3) and assumes an orientation directed downwards towards the ground also when the ground working machine is parked on the ground in a parking position.

10. Agricultural ground working machine according to any one of the preceding claims, wherein said ground working tool (9) forms a centre tool in a centre track left unworked by further ground working tools and/or a track loosening tool in the tracks of tractor wheels, wherein the ground working tool (9) is preferably arranged running ahead of or behind a main ground working tool row.

11. Agricultural ground working machine according to any one of the preceding claims, wherein the ground working tool (9) has ground tines.

12. Agricultural ground working machine according to any one of the preceding claims, wherein further ground working tools (7) are arranged on one or more foldable unit parts which can be brought from a lowered working position into a raised, in particular upright transport and/or headland position, wherein the ground working tool (9) movable forwards and upwards into said parking position is suspended on a machine part, which is excluded from said movement of said unit parts into the raised headland and/or transport position.

13. Method for parking an agricultural ground working machine (1), which is configured in accordance with one of the preceding claims, in a parking position on the ground, wherein at least one unit part is brought into a headland and/or transport position reducing the machine working width and the ground working machine is lowered onto the ground, wherein, during and/or after the lowering, the ground working machine (1) is moved rearwards against its intended working direction of travel (16) and the ground working tool (9) is moved forwards and upwards into its parking position as a result of engagement with the ground when moving backwards from its ready-to-work starting position.

## Revendications

1. Machine de travail du sol agricole, avec au moins un outil de travail du sol (9), qui peut être déplacé, en particulier est suspendu de manière à pouvoir pivoter, dans un plan droit pointant dans la direction de déplacement, dans laquelle l'outil de travail du sol (9) est suspendu de manière à pouvoir pivoter autour d'un axe de pivotement (15) horizontal s'étendant de manière transversale par rapport à la direction de déplacement à partir d'une position de départ prête à travailler, que l'outil de travail du sol (9) adopte au moins sans forces d'intervention au sol, dans la direction de déplacement (16) en haut vers l'avant dans une position de rangement, **caractérisée en ce que** ledit outil de travail du sol (9) peut être dévié de la position de départ prête à travailler de manière élastique vers l'arrière dans une position d'évitement autour dudit axe de pivotement (15) en surmontant des forces de précontrainte élastiques d'un système de précontrainte.

2. Machine de travail du sol agricole selon la revendication précédente, dans laquelle l'outil de travail du sol (9) est monté de manière à pouvoir être déplacé sans force de précontrainte depuis ladite position de départ dans ladite position de rangement.

3. Machine de travail du sol agricole selon l'une quelconque des revendications précédentes, dans laquelle ledit outil de travail du sol (9) revient, en particulier par pivotement, de manière autonome par la gravité depuis la position de rangement dans la position de départ prête à travailler lorsque l'outil de travail du sol (9) est dégagé du sol et/ou que la machine de travail du sol (1) est relevée.

4. Machine de travail du sol agricole selon l'une quelconque des revendications précédentes, dans laquelle une butée (17) est prévue, sur laquelle l'outil de travail du sol (9) est présent dans la position de départ prête à travailler et de laquelle l'outil de travail du sol (9) se détache lorsqu'il est amené dans ladite position de rangement.

5. Machine de travail du sol agricole selon la revendication 4, dans laquelle ladite butée (17) est montée de manière mobile et est reliée au système de précontrainte, de telle sorte que l'outil de travail du sol (9) peut éviter la position de départ prête à travailler lorsqu'il heurte un obstacle en surmontant la force de précontrainte du système de précontrainte à l'encontre de la direction de déplacement (16) vers l'arrière.

6. Machine de travail du sol agricole selon l'une quelconque des revendications précédentes, dans laquelle l'outil de travail du sol (9) est suspendu de manière variable en hauteur et peut être réglé ainsi dans la profondeur de travail.

7. Machine de travail du sol agricole selon la revendication précédente, dans laquelle un guide coulissant (11) est prévu pour ajuster la profondeur de travail de l'outil de travail du sol (9) et présente un système d'immobilisation (13) destiné à immobiliser l'outil de travail du sol (9) dans différentes positions en hauteur, dans laquelle le système d'immobilisation (13) comprend l'axe de pivotement (15), autour duquel l'outil de travail du sol (9) peut être pivoté depuis ladite position de départ prête à travailler dans ladite position de rangement.

8. Machine de travail du sol agricole selon la revendication précédente, dans laquelle le guide coulissant (11) présente un patin de maintien (12) en forme de U ouvert en direction d'un côté, dans lequel l'outil de travail du sol (9) peut être ajusté de manière rigide de manière transversale par rapport à la direction de déplacement (16), toutefois dans une direction en hauteur et est maintenu de manière à pouvoir pivoter entre la position de départ prête à travailler et la position de rangement.

9. Machine de travail du sol agricole selon l'une quelconque des revendications précédentes, dans laquelle ledit outil de travail du sol (9) est suspendu sur une partie de bâti de machine centrale (5) et/ou sur un support rapporté (3) et, lorsque la machine de travail du sol est posée sur le sol dans une position de stationnement, adopte une orientation dirigée vers le bas vers le sol.

10. Machine de travail du sol agricole selon l'une quelconque des revendications précédentes, dans laquelle ledit outil de travail du sol (9) forme un outil central sur une voie de déplacement centrale laissée non travaillée par d'autres outils de travail du sol et/ou un outil d'ameublissement des traces sur les traces de déplacement de roues de tracteur, dans laquelle l'outil de travail du sol (9) est disposé de préférence en amont ou en aval par rapport à une rangée principale d'outils de travail du sol.

11. Machine de travail du sol agricole selon l'une quelconque des revendications précédentes, dans laquelle l'outil de travail du sol (9) présente une dent de travail du sol.

12. Machine de travail du sol agricole selon l'une quelconque des revendications précédentes, dans laquelle d'autres outils de travail du sol (7) sont disposés sur une ou plusieurs parties d'agrégat rabattables, qui peuvent être amenées depuis une position de travail abaissée dans une position de transport et/ou de tournière relevée, en particulier verticale, dans laquelle l'outil de travail du sol (9) pouvant être déplacé dans la direction de déplacement en haut vers l'avant dans ladite position de rangement est suspendu sur une partie de machine, qui est exclue dudit déplacement desdites parties d'agrégat dans la position de tournière et/ou de transport relevée.

13. Procédé de rangement d'une machine de travail du sol agricole (1), qui est réalisée selon l'une quelconque des revendications précédentes, dans une position de stationnement sur le sol, dans lequel au moins une partie d'agrégat est amenée dans une position de tournière et/ou de transport réduisant la largeur de travail de machine et la machine de travail du sol est abaissée sur le sol, dans lequel lors et/ou après l'abaissement, la machine de travail du sol (1) est déplacée vers l'arrière à l'encontre de sa direction de déplacement de travail (16) conforme à l'usage prévu et l'outil de travail du sol (9) est déplacé lors du trajet de retour depuis sa position de départ prête à travailler en haut vers l'avant dans sa position de rangement par une intervention au sol.
